# EUROPÄISCHE PATENTSCHRIFT

(11) **EP 2 600 985 B1**
(45) Veröffentlichungstag und Bekanntmachung des Hinweises auf die Patenterteilung: **12.09.2018**
(21) Anmeldenummer: 11760692.1
(22) Anmeldetag: 28.07.2011
(51) Int. Cl.: B05B 14/462, B05B 14/468, B05B 13/04

(54) **IM UMLUFTBETRIEB ARBEITENDE LACKIERANLAGE**
PAINTING SYSTEM OPERATING IN RECIRCULATING AIR MODE
INSTALLATION DE LAQUAGE TRAVAILLANT EN MODE CIRCULATION D'AIR

(30) Priorität: 06.08.2010 DE 102010033711
(43) Veröffentlichungstag der Anmeldung: 12.06.2013
(73) Patentinhaber: Eisenmann SE, 71032 Böblingen (DE)
(72) Erfinder: SCHLIPF, Michael, 73035 Göppingen (DE); HEILAND, Detlef, 38364 Schöningen (DE)
(74) Vertreter: Ostertag & Partner Patentanwälte mbB
(86) Internationale Anmeldenummer: PCT/EP2011/003795
(87) Internationale Veröffentlichungsnummer: WO 2012/016663

(56) Entgegenhaltungen:
- DE-A1- 4 234 527
- DE-A1- 10 155 759
- GB-A- 2 120 576
- US-A1- 2004 084 373

## Beschreibung

Die Erfindung betrifft eine im Umluftbetrieb arbeitende Lackieranlage, insbesondere zum Lackieren von Fahrzeuganbauteilen oder Fahrzeugkarosserien, mit
a) einer Spritzkabine, die von oben nach unten umfasst:
   aa) ein Luftplenum, dem konditionierte Umluft zuführbar ist;
   ab) einen Lackierbereich, in dem mindestens eine Applikationseinrichtung zum Aufbringen des Lackes vorgesehen ist und der von Umluft durchströmbar ist, die dabei Lack-Overspraypartikel auf- und mitnimmt;
   ac) einer Auswaschung, in welcher die von dem Lackierbereich kommende, mit Lack-Overspraypartikeln beladene Umluft mit einem Wasserstrom in Wechselwirkung gebracht und dabei wenigstens teilweise von Lack-Overspraypartikeln befreit wird;
b) einer Konditioniereinheit, die in dem Zirkulationsweg der Umluft liegt und mindestens einen Kondensator und/oder einen Tropfenabscheider enthält, wobei die aus dem Kondensator und/oder dem Tropfenabscheider gewonnene Flüssigkeit in die Lackieranlage zurückführbar ist.

Im Umluftbetrieb arbeitende Lackieranlagen dieser Art besitzen im Allgemeinen Automatikkabinen, das heißt Kabinen, die mit Flächenautomaten oder Robotern zum Führen der Applikationseinrichtung bestückt sind. Die durch den Lackierbereich und die Auswaschung geführte Umluft reichert sich in letzterer sehr mit Wasser an und muss daher, um erneut in den Lackierbereich der Spritzkabine eingebracht werden zu können, wieder entfeuchtet werden. Dies geschieht mittels einer Konditioniereinheit, die mindestens einen Kondensator und/ oder einen Tropfenabscheider enthält. Weitere Bestandteile der Konditioniereinheit können Heizeinrichtungen und/oder Filter sein, die jedoch im vorliegenden Zusammenhang nicht interessant sind.
Um den Gesamtwasserbedarf der Lackieranlage so gering wie möglich zu halten, wird schon bisher ein Teil der aus der Konditioniereinheit, genauer dem in dieser befindlichen Kondensator oder dem Tropfenabscheider, zurückgewonnenen Flüssigkeit in die Anlage zurückgeführt. Bei bekannten Lackieranlagen der eingangs genannten Art geschieht dies dadurch, dass diese Flüssigkeit in den Systemtank eingeleitet wird, in welchem das Wasser, welches die Auswaschung durchströmt, zwischengespeichert wird. Dieses im Systemtank zwischengespeicherte Wasser reichert sich bei der Zirkulation durch die Auswaschung mit verschiedenen Chemikalien und Lackinhaltsstoffen an und muss daher regelmäßig regeneriert werden. In welcher Weise dies geschieht, ist im vorliegenden Zusammenhang nicht von Interesse. Festgehalten sei an dieser Stelle nur, dass unter dem Begriff des "Wassers" im vorliegenden Zusammenhang kein reines Wasser, sondern mit Chemikalien versetztes Wasser verstanden wird. Herkömmliche Lackieranlagen, in denen Reinigungswasser wieder aufbereitet und im Flüssigkeitskreislauf für Reinigungswasser wiederverwendet wird, sind etwa bekannt aus DE4234527A1 und DE10155759A1.

Ferner ist ein Verfahren zur Wiederaufbereitung von Spülflüssigkeit für Sprühköpfe aus US2004084373A1 bekannt.

Gerade in Automatikkabinen findet häufig ein Farbwechsel statt. Jeder Farbwechsel bedingt, dass alle Bestandteile der Anlage, insbesondere der Applikationseinrichtungen, die mit der zuvor benutzten Farbe in Berührung gekommen sind, sorgfältig gereinigt werden, bevor der Betrieb mit der neuen Farbe begonnen werden kann. Hierzu wird eine spezielle Spülflüssigkeit eingesetzt.

Aufgabe der vorliegenden Erfindung ist es, eine Lackieranlage der eingangs genannten Art so auszugestalten, dass bei weiterer Verbesserung des Wasserhaushaltes insgesamt kostengünstiger betrieben werden kann.

Diese Aufgabe wird erfindungsgemäß dadurch gelöst, dass
d) die aus dem Kondensator und/oder dem Tropfenabscheider gewonnene Flüssigkeit zumindest teilweise der Versorgungsquelle für Spülflüssigkeit zuführbar ist.

Mit der vorliegenden Erfindung wurde erkannt, dass sich in der aus der Konditioniereinheit gewonnenen Flüssigkeit in erheblichem Umfange Chemikalien befinden, die bei ihrer Entsorgung über den Systemtank zu einem höheren Aufwand an Koaguliermitteln, Entklebungsmittels und Polyelektrolyten führen, was die Betriebskosten der Anlage verteuert. Gleichzeitig wurde erkannt, dass die in dieser Flüssigkeit befindlichen Chemikalien durchaus nützlich sein können, wenn sie zur Herstellung der Spülflüssigkeit zur Verfügung gestellt werden, mit deren Hilfe insbesondere die Applikationseinrichtung bei Farbwechseln gereinigt wird. An dieser Stelle können also Chemikalienkosten eingespart werden.

Bei den fraglichen Chemikalien handelt es sich beispielsweise um Butylglykol, Butyldiglykol, Butanol, längerkettige Alkohole, Aminoethanole und oberflächenaktive Substanzen.

Zweckmäßigerweise umfasst die Versorgungsquelle für Spülflüssigkeit einen Ansatzbehälter, dem die aus dem Kondensator und/oder dem Tropfenabscheider gewonnene Flüssigkeit zuführbar ist, und einen Vorratsbehälter für ein Hydrospülkonzentrat. Die Chemikalienkonzentration in der aus der Konditioniereinheit entnommenen Flüssigkeit ist im Verlauf der Zeit nicht konstant, so dass aus dem Vorratsbehälter für das Hydrospülkonzentrat in den Ansatzbehälter jeweils diejenige Menge Hydrospülkonzentrat zudosiert werden kann, die für die richtige Wirkungsweise der Spülflüssigkeit erforderlich ist.

Im Allgemeinen kann die aus dem Kondensator und/oder dem Tropfenabscheider gewonnenen Flüssigkeit nicht direkt der Versorgungsquelle für Spülflüssigkeit zugeführt werden. Sie kann durchaus noch in gewissem Umfange Feststoffe enthalten, die zu Unverträglichkeiten in den Applikationseinrichtungen und dem Lackierergebnis führen könnten. Daher empfiehlt sich eine Ausgestaltung der Erfindung, bei welchen ein Filter vorgesehen ist, welches von der aus dem Kondensator und/oder dem Tropfenabscheider gewonnenen Flüssigkeit durchströmbar ist.

Auch die Freiheit von größeren Feststoffpartikeln in der der Konditioniereinheit entnommenen Flüssigkeit stellt noch nicht zweifelsfrei sicher, dass diese Flüssigkeit zur Verwendung in der Spülflüssigkeit geeignet ist. Es gibt durchaus filtergängige Substanzen, die im Betrieb der Lackieranlage oder beim Lackierergebnis zu Störungen führen könnten, wenn sie in die Spülflüssigkeit gelangen. Daher ist bei einer besonders bevorzugten Ausführungsform der Erfindung eine Prüfstation vorgesehen, welche durch eine Messung der Leitfähigkeit und/oder des Brechungsindexes und/oder der Trübung der aus dem Kondensator und/oder dem Tropfenabscheider gewonnenen Flüssigkeit deren Eignung zur Wiederverwendung in der Spülflüssigkeit überprüft. Eine zusätzliche chargenweise Überprüfung auf Lackbenetzungsstörungen kann bei Bedarf durchgeführt werden. Nicht geeignete Flüssigkeit wird einem Vorratsbehälter zugeführt. Dieser minderwertige Flüssigkeitsanteil kann ebenfalls noch in der Anlage genutzt werden, allerdings nicht als Spülflüssigkeit, sondern beispielsweise als Reinigungsflüssigkeit, um in Betriebspausen Anlagenteile, zum Beispiel die in der Spritzkabine vorhandenen Wände und/oder Roste und/ oder Wände der Auswaschung und/ oder die Abluftkanäle zu reinigen.

Zweckmäßigerweise sind mindestens zwei parallel liegende Vorlagebehälter vorgesehen, in denen wahlweise aus dem Kondensator und/oder dem Tropfenabscheider kommende Flüssigkeiten zwischenspeicherbar ist, bevor sie der Versorgungsquelle für Spülflüssigkeit zugeführt wird. Die Vorgehensweise ist dabei so, dass zunächst einer der beiden Vorlagebehälter gefüllt wird. Bei Abschluss dieses Spülvorganges stellt sich in dem Vorlagebehälter eine bestimmte Konzentration von Chemikalien in der Flüssigkeit ein. Wenn nunmehr diese Flüssigkeit aus dem ersten Vorlagebehälter in den Ansatzbehälter der Versorgungsquelle der Spülflüssigkeit eingegeben wird, kann, angepasst an diese Chemikalienkonzentration, aus dem entsprechenden Vorratsbehälter eine geeignete Menge Hydrospülkonzentrat zudosiert werden. Während die Flüssigkeit aus dem ersten Vorlagebehälter abgezogen wird, wird der zweite, parallel liegende Vorlagebehälter gefüllt. Wenn dieser voll ist, hat sich im Allgemeinen in der dort gespeicherten Flüssigkeit eine andere Konzentration an Chemikalien eingestellt, die dann bei Eingabe in die Versorgungsquelle für Spülflüssigkeit eine andere Zudosierung von Hydrospülkonzentrat erfordert.

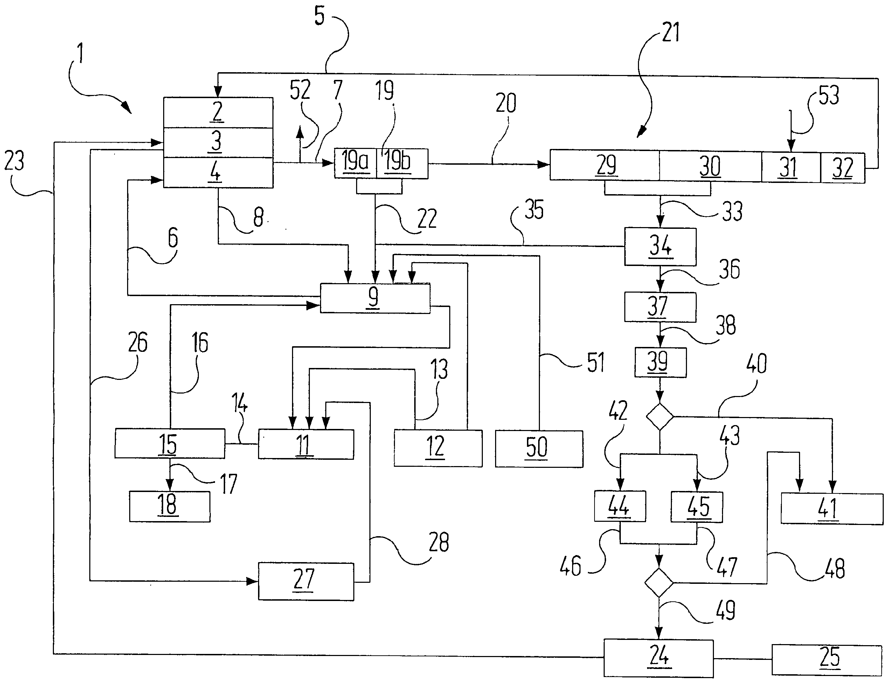

Ein Ausführungsbeispiel der Erfindung wird nachfolgend anhand der Zeichnung näher erläutert; die einzige Figur zeigt schematisch eine im Umluftbetrieb arbeitende Anlage zum Lackieren von Fahrzeuganbauteilen.

Die in der Zeichnung dargestellte Anlage umfasst als Hauptkomponente eine in ihrem grundsätzlichen Aufbau bekannte Spritzkabine, die insgesamt mit dem Bezugszeichen 1 gekennzeichnet ist. Erkennbar in der Zeichnung sind von oben nach unten ein Luftplenum mit Filterdecke 2, ein Lackierbereich 3, in welchem im Allgemeinen nicht dargestellte Flächenautomaten oder Roboter angeordnet sind, welche Applikationseinrichtungen beim Lackiervorgang führen. Durch den Lackierbereich 3 werden die Fahrzeuganbeuteile mittels eines geeigneten Transportsystems hindurchgeführt. Über eine großflächige, mit einem begehbaren Rost abgedeckte Öffnung steht der Lackierbereich 3 mit einer darunter befindlichen Auswaschung 4 in Verbindung.

Die gesamte Lackierkabine 1 wird von oben nach unten von einem Umluftstrom durchsetzt, welcher über eine Leitung 5 zunächst dem Luftplenum 2 zugeführt und dann über die das Luftplenum 2 nach unten begrenzende Filterdecke in den Lackierbereich 3 eingebracht wird. Dort nimmt sie den beim Lackiervorgang entstehenden Overspray, also nicht an den Fahrzeuganbauteilen zur Haftung gekommene Lackpartikel, auf und transportiret diese in die Auswaschung 4. In der Auswaschung 4, die häufig als sogenannte Venturi-Auswaschung ausgestaltet ist, werden die Lackpartikel mit Hilfe eines Wasserstromes, der über eine Leitung 6 zugeführt wird, aus der Umluft ausgewaschen. Wenn letztere die Auswaschung 4 über die Leitung 7 verlässt, ist sie weitgehend von Lackpartikeln befreit. Das mit Lackpartikeln beladene Wasser wird der Auswaschung 4 über die Leitung 8 entnommen und einem Systemtank 9 zugeführt.

Aus dem Systemtank 9 gehen zwei Leitungen ab, nämlich zum einen die oben schon erwähnte Leitung 6, die zur Auswaschung 4 in der Spritzkabine 1 führt, sowie eine weitere Leitung 10, die mit einem Dekanter-Vorlagebehälter 11 verbunden ist. Dort wird dem Wasser Koagulier- und Spaltmittel zugesetzt, welches aus einem entsprechenden Vorratsbehälter 12 über eine Leitung 13 eingebracht wird.

Aus dem Dekanter-Vorlagebehälter 11 gelangt das mit Lackpartikeln beladene Wasser über eine Leitung 14 in einen Dekanter 15. Dort werden, wie der Name "Dekanter" sagt, mit Hilfe eines Dekantierprozesses unter Bildung eines Schlammes die Lackpartikel von dem Wasser getrennt. Das weitgehend von Lackpartikeln befreite Wasser gelangt über eine Leitung 16 zum Systemtank 9 zurück, während der Lackschlamm über eine Leitung 17 einem Entsorgungsbehälter 18 zugeführt wird.

Ein weiterer Vorratsbehälter 50 für Koagulier- und Spaltmittel ist über eine Leitung 51 direkt mit dem Systemtank 9 verbunden. Das in den Dekanter-Vorlagebehälter 11 zudosierte Mittel muss zumindest flockenbildend, das direkt in den Systemtank 9 zusdosierte Mittel muss zumindest lackentklebend sein.

Die die Spritzkabine 1 über die Leitung 7 verlassende, in der Auswaschung 4 weitgehend von Lackpartikeln befreite Umluft wird zunächst einer in diesem Ausführungsbeispiel zweistufigen Filtrationseinheit 19 und sodann über eine Leitung 20 einer insgesamt mit dem Bezugszeichen 21 gekennzeichneten Konditioniereinheit zugeführt, die weiter unten näher erläutert ist. In dieser Konditioniereinheit 21 wird die Umluft so aufbereitet, dass sie über die oben schon erwähnte Leitung 5 in die Spritzkabine 1 rezirkuliert werden kann.

Im Filter 19a der Filtereinheit 19 werden aus der Umluft Lackpartikel und im Filter 19b Lacktropfen entfernt. Beides gelangt über eine Leitung 22 zurück in den Systemtank 9.

Von der Leitung 5 zweigt eine in die Umgebungsatmosphäre führende Abluftleitung 52 ab; im Bereich der Konditioniereinheit 21 kann über eine Leitung 53 Frischluft zugeführt werden. So kann bei Bedarf von einem reinen Umluftbetrieb in einen Frisch/Abluftbetrieb bei Wartungsarbeiten oder in einen Mischbetrieb zur Reduktion des Lösemittelgehaltes in der Umluft zur Vermeidung einer Explosionsgefahr übergegangen werden.

Bisher war im Wesentlichen von zwei Medien die Rede, welche in der Lackieranlage eingesetzt werden, nämlich von der Umluft, welche die Spritzkabine 1 von oben nach unten durchsetzt, sowie von dem Wasser, welches in der Auswaschung 4 zur (weitgehenden) Befreiung der Umluft von Lackpartikeln eingesetzt wird. In derartigen Lackieranlagen findet jedoch noch ein weiteres Medium Verwendung, nämlich eine Spülflüssigkeit, auf die nunmehr näher eingegangen wird.

Bei Lackieranlagen der hier interessierenden Art, also normalerweise bei Automatikkabinen, in deren Spritzkabinen Flächenautomaten oder Roboter zur Führung der Applikationseinrichtungen angeordnet sind, findet häufig ein Farbwechsel statt. Vor dem Wechsel von einer Farbe auf eine andere Farbe des zur Anwendung kommenden Lackes müssen insbesondere die Applikationseinrichtungen von dem zuletzt verwendeten Lack gereinigt werden. Hierzu wird die schon erwähnte Spülflüssigkeit eingesetzt, die über die Leitung 23 in den Lackierbereich 3 der Spritzkabine 1, dort insbesondere den Applikationseinrichtungen, zugeführt wird. Diese Spülflüssigkeit kommt aus einem Ansatzbehälter 24 einer Versorgungsquelle 24, 25, in welchem zudem gerührt wird und der mit einem zu verdünnenden Hydrospülkonzentrat aus einem Vorratsbehälter 25 beschickt werden kann.

Soweit die Spülflüssigkeit in dem Lackierbereich 3 der Spritzkabine 1 aufgefangen werden kann, wird diese über eine Leitung 26 einem Behälter 27 zugeführt und von diesem über eine Leitung 28 in den Dekanter-Vorlagebehälter 11 weitergegeben.

Aus der obigen Beschreibung folgt, dass das "Wasser", welches das den Luftstrom reinigende Medium in der Auswaschung 4 ist, kein reines Wasser sondern mit verschiedenen Chemikalien angereichert ist.

Die Konditioniereinheit 21 umfasst im dargestellten Ausführungsbeispiel vier Untereinheiten, nämlich einen Kondensator 29, einen Tropfenabscheider 30, eine Heizung 31 und ein weiteres Filter 32. Kondensator 29 und Tropfenabscheider 30 dienen dazu, den Feuchtigkeitsgehalt der umgewälzten Umluft zu reduzieren, die Heizung dazu, die umgewälzte Umluft wieder auf die in der Spritzkabine 1 geforderte Temperatur aufzuheizen, während das Filter 32 letzte Partikel aus der umgewälzten Umluft entfernt.

Die Flüssigkeiten, welche dem Kondensator 29 und dem Tropfenabscheider 30 entnommen werden, werden nachfolgend der Einfachheit halber gemeinsam "Kondensat" genannt, obwohl streng genommen nur eine der beiden Flüssigkeiten ein echtes Kondensat ist. Sie gelangen über eine Leitung 33 zunächst in einen Kondensat-Vorlagebehälter 34. Eine Leitung 35 verbindet einen Überlauf des Kondensat-Vorlagebehälters 34 mit dem Systemtank 9, so dass bei zuviel anfallendem Kondensat dieses direkt in den Kreislauf des die Auswaschung 4 durchströmenden Wassers zurückgeführt werden kann.

Soweit das Niveau des Überlaufes nicht erreicht wird, gelangt das sich im Kondensat-Vorlagebehälter 34 sammelnde Kondensat über eine Leitung 36 zunächst in ein Beutelfilter 37, in welchem eventuell enthaltene Partikel entfernt werden, und sodann über eine Leitung 38 in eine Prüfstation 39. In dieser Prüfstation 39 wird das Kondensat darauf untersucht, ob bei seiner Wiederverwendung möglicherweise Lackbenetzungsstörungen oder andere Probleme eintreten könnten. Hierzu findet unter Anderem eine Prüfung der Leitfähigkeit, des Brechungsindexes und der Trübung des Kondensates statt. Gegebenenfalls kan hier auch eine Probecharge entnommen werden und auf die Verursachung von Lackbenetzungsstörungen untersucht werden. Fallen diese Prüfungen negativ in dem Sinne aus, dass das Kondensat zur Wiederverwendung ungeeignet ist, wird es über eine Leitung 40 einem Vorlagebehälter 41 zugeführt. Das sich hier sammelnde Kondensat kann noch als Reinigungsflüssigkeit für die Anlage verwendet werden. Es scheidet aber aus dem Kreislauf aus.

Soweit bei der Prüfung festgestellt wird, dass das Kondensat zur Weiterverwendung geeignet ist, wird dieses über Leitungen 42, 43 wahlweise einem von zwei Vorlagebehältern 44 und 45 zugeführt. Fällt zu viel Kondensat an, sodass es von den Vorlagebehältern 44 und 45 nicht mehr aufgenommen werden kann, wird es über die Leitung 48 ebenfalls in den Vorlagebehälter 41 für Reinigungsflüssigkeit geleitet. Während einer der beiden Vorlagebehälter 44, 45 gefüllt wird, z.B. der Vorlagebehälter 44, wird aus dem anderen Vorlagebehälter, im Beispiel derjenige mit dem Bezugszeichen 45, Kondensat über die Leitung 49 in den Ansatzbehälter 24 der Spülflüssigkeitsversorgungsquelle gegeben und gegebenenfalls aus dem Vorratsbehälter 25 in der erforderlichen Weise mit Hydrospülkondensat aufkonzentriert.

Aus der obigen Beschreibung ergibt sich, dass durch die Wiedergewinnung der kondensierbaren und tropfenförmigen Bestandteile der Umluft, welche die Auswaschung 4 der Spritzkabine 1 verlässt, nicht nur der Wasserhaushalt der Lackieranlage günstig beeinflusst, das heißt, der Bedarf an Frischwasser reduziert werden kann. Darüber hinaus ist es möglich, den Chemikalienbedarf gering zu halten, da ein Teil der Chemikalien, der bisher mit dem Kondensat in das die Auswaschung 4 durchströmende Wasser über- und damit verloren ging - wiedergewonnen werden kann.

## Patentansprüche

1. Im Umluftbetrieb arbeitende Lackieranlage, insbesondere
zum Lackieren von Fahrzeuganbauteilen oder Fahrzeugkarosserien, mit
a) einer Spritzkabine (1), die von oben nach unten umfasst:
aa) ein Luftplenum (2), dem konditionierte Umluft zuführbar ist;
ab) einen Lackierbereich (3), in dem mindestens eine Applikationseinrichtung zum Aufbringen des Lackes vorgesehen ist und der von Umluft durchströmbar ist, die dabei Lack-Overspraypartikel auf- und mitnimmt;
ac) einer Auswaschung (4), in welcher die von dem Lackierbereich kommende, mit Lack-Overspraypartikeln beladene Umluft in Wechselwirkung mit einem Wasserstrom gebracht und dabei zumindest teilweise von Lack-Overspraypartikeln befreit wird;
b) einer Konditioniereinheit (21), die in dem Zirkulationsweg der Umluft liegt und mindestens einen Kondensator (29) und/oder einen Tropfenabscheider (30) enthält, wobei die aus dem Kondensator (29) und/oder dem Tropfenabscheider (30) gewonnene Flüssigkeit in die Lackieranlage zurückführbar ist;
c) einer Versorgungsquelle (24, 25) für Spülflüssigkeit, welche der Applikationseinrichtung zur Reinigung zuführbar ist;
**dadurch gekennzeichnet, dass**
d) die aus dem Kondensator (29) und/oder dem Tropfenabscheider (30) gewonnene Flüssigkeit zumindest teilweise der Versorgungsquelle (24, 25) für Spülflüssigkeit zuführbar ist.

2. Lackieranlage nach Anspruch 1, **dadurch gekennzeichnet, dass** die Versorgungsquelle für Spülflüssigkeit (24, 25) einen Ansatzbehälter (24), dem die aus dem Kondensator (29) und/oder dem Tropfenabscheider (30) gewonnene Flüssigkeit zuführbar ist, und einen Vorratsbehälter (25) für ein Hydrospülkonzentrat (25) umfasst.

3. Lackieranlage nach Anspruch 1 oder 2, **dadurch gekennzeichnet, dass** ein Filter (34) vorgesehen ist, welches von der aus dem Kondensator (29) und/oder dem Tropfenabscheider (30) gewonnenen Flüssigkeit durchströmbar ist.

4. Lackieranlage nach einem der vorhergehenden Ansprüche,
**dadurch gekennzeichnet, dass** eine Prüfstation (39) vorgesehen ist, welche durch eine Messung der Leitfähigkeit und/oder des Brechungsindexes und/oder der Trübung der aus dem Kondensator (29) und/oder dem Tropfenabscheider (30) gewonnenen Flüssigkeit deren Eignung zur Wiederverwendung in der Spülflüssigkeit überprüft, wobei nicht geeignete Flüssigkeit in einen Vorratsbehälter (41) leitbar ist.

5. Lackieranlage nach einem der vorhergehenden Ansprüche,
**dadurch gekennzeichnet, dass** mindestens zwei parallel liegende Vorlagebehälter (44, 45) vorgesehen sind, in denen wahlweise aus dem Kondensator (29) und/oder dem Tropfenabscheider (30) kommende Flüssigkeit zwischenspeicherbar ist, bevor sie der Versorgungsquelle (24, 25) für Spülflüssigkeit zuführbar ist.

## Claims

1. A painting system operating in recirculating air mode, in particular for painting vehicle attachment parts or vehicle bodies, having
a) a spray booth (1) which, from the top downwards, includes:
aa) an air plenum (2) to which conditioned recirculating air may be fed;
ab) a painting region (3) in which at least one application device for applying the paint is provided and which can be flown through by recirculating air which thereby takes up and carries along paint overspray particles;
ac) a washout (4) in which the recirculating air coming from the painting region and laden with paint overspray particles interacts with a water flow and is at least partially freed of paint overspray particles;
b) a conditioning unit (21) which lies in the circulation path of the recirculating air and contains at least a condenser (29) and/or a droplet separator (30), wherein the liquid obtained from the condenser and/or the droplet separator may be returned to the painting system;
c) a supply source (24, 25) for rinsing liquid which may be fed to the application device for cleaning;
**characterized in that**
d) the liquid obtained from the condenser (29) and/or the droplet separator (30) may be fed at least partially to the supply source (24, 25) for rinsing liquid.

2. A painting system according to Claim 1, **characterized in that** the supply source for rinsing liquid (24, 25) includes a preparation tank (24), to which the liquid obtained from the condenser (29) and/or the droplet separator (30) may be fed, and a storage tank (25) for an aqueous rinsing concentrate (25).

3. A painting system according to Claim 1 or 2, **characterized in that** a filter (34) is provided through which liquid obtained from the condenser (29) and/or the droplet separator (30) may flow.

4. A painting system according to one of the preceding Claims, **characterized in that** a test station (39) is provided which, by measuring the conductivity and/or the refractive index and/or the turbidity of the liquid obtained from the condenser (29) and/or the droplet separator (30), checks its suitability for re-use in the rinsing liquid, wherein unsuitable liquid may be guided to a storage tank (41).

5. A painting system according to one of the preceding Claims, **characterized in that** at least two parallel receiver tanks (44, 45) are provided, in which liquid coming from the condenser (29) and/or the droplet separator (30) may be temporarily stored before it may be fed to the supply source (24, 25) for rinsing liquid.

## Revendications

1. Installation de peinture travaillant en mode de circulation d'air, en particulier pour la peinture d'éléments de carrosserie de véhicule ou de carrosseries de véhicules, avec
a) une cabine de projection (1), qui comprend de haut en bas:
aa) un réservoir d'air (2), auquel de l'air de circulation conditionné peut être envoyé;
ab) une zone de peinture (3), dans laquelle il est prévu au moins un système d'application pour appliquer la peinture et qui peut être traversé par de l'air de circulation, qui dépose et emporte en l'occurrence des particules de peinture pulvérisées;
ac) une zone de lavage (4), dans laquelle l'air de circulation venant de la zone de peinture et chargé de particules de peinture pulvérisées est mis en interaction avec un flux d'eau et est ainsi débarrassé au moins en partie des particules de peinture pulvérisées;
b) une unité de conditionnement (21), qui est située dans le chemin de circulation de l'air de circulation et contient au moins un condenseur (29) et/ou un séparateur de gouttes (30), dans lequel le liquide recueilli à partir du condenseur (29) et/ou du séparateur de gouttes (30) peut être renvoyé dans l'installation de peinture;
c) une source d'alimentation (24, 25) pour un liquide de rinçage, qui peut être envoyé au système d'application pour le nettoyage;
**caractérisée en ce que**
d) le liquide recueilli à partir du condenseur (29) et/ou du séparateur de gouttes (30) peut être envoyé au moins en partie à la source d'alimentation (24, 25) pour liquide de rinçage.

2. Installation de peinture selon la revendication 1, **caractérisée en ce que** la source d'alimentation pour liquide de rinçage (24, 25) comprend une cuve de préparation (24), à laquelle le liquide recueilli à partir du condenseur (29) et/ou du séparateur de gouttes (30) peut être envoyé, et une cuve de stockage (25) pour un concentré d'hydrorinçage (25).

3. Installation de peinture selon la revendication 1 ou 2, **caractérisée en ce qu'**il est prévu un filtre (34), qui peut être traversé par le liquide recueilli à partir du condenseur (29) et/ou du séparateur de gouttes (30).

4. Installation de peinture selon l'une quelconque des revendications précédentes, **caractérisée en ce qu'**il est prévu une station de contrôle (39), qui vérifie, par une mesure de la conductibilité et/ou de l'indice de réfraction et/ou de la turbidité du liquide recueilli à partir du condenseur (29) et/ou du séparateur de gouttes (30), son aptitude à être réutilisé dans le liquide de rinçage, dans laquelle un liquide inapte peut être conduit dans une cuve de stockage (41).

5. Installation de peinture selon l'une quelconque des revendications précédentes, **caractérisée en ce qu'**il est prévu au moins deux cuves collectrices (44, 45), dans lesquelles le liquide venant au choix du condenseur (29) et/ou du séparateur de gouttes (30) peut être stocké provisoirement, avant de pouvoir être envoyé à la source d'alimentation (24, 25) pour liquide de rinçage.
